# EUROPÄISCHE PATENTANMELDUNG

(11) **EP 4 269 516 A1**
(43) Veröffentlichungstag der Anmeldung: **01.11.2023**
(21) Anmeldenummer: 23157935.0
(22) Anmeldetag: 22.02.2023
(51) Int. Cl.: C09D 183/14, C08J 7/048

(54) **ZUSAMMENSETZUNG FÜR HYBRIDPOLYMERE MIT BARRIEREFUNKTION**

(30) Priorität: 27.04.2022 DE 102022110131
(71) Anmelder: Fraunhofer-Gesellschaft zur Förderung der angewandten Forschung e.V., 80686 München (DE)
(72) Erfinder: Somorowsky, Ferdinand, 97082 Würzburg (DE); Amberg-Schwab, Sabine, 97082 Würzburg (DE)
(74) Vertreter: Strehl Schübel-Hopf & Partner

(57) **Zusammenfassung**

Zusammensetzung, welche die Verbindungen (A) bis (C) in den folgenden Anteilen enthält, die zusammen 100 Molprozent ergeben: (A) mindestens 30 Molprozent eines Silans mit vier hydrolytisch kondensierbaren Gruppen, (B) mindestens 30 Molprozent eines Silans mit organisch vernetzbaren Gruppen und ggf. hydrolytisch kondensierbaren Gruppe, und (C) mindestens 10 Molprozent einer Verbindung eines vierwertigen Metall mit einer hydrolytisch kondensierbaren Gruppe ist; Verfahren zur Herstellung eines Hybridpolymers aus der Zusammensetzung; daraus hergestelltes Hybridpolymer; Verwendung des Hybridpolymers als Barriereschicht; Verbund, enthaltend ein Substrat und die Hybridpolymerschicht; Verwendung des Verbundes als Verpackungsmaterial.

## Beschreibung

### Gebiet der Erfindung

Die vorliegende Erfindung betrifft einen Verbund mit Barrierefunktion, ein Verfahren zur Herstellung desselben, ein den Verbund enthaltendes Barrierematerial sowie die Verwendung des Verbundes als Barrierematerial, beispielsweise als Verpackungsmaterial.

### Stand der Technik

Kunststoffverpackungen enthalten Basispolymere, die nur ungenügende Barriereeigenschaften gegenüber der Migration von Sauerstoff und Wasserdampf aufweisen. Deshalb müssen in die Verpackungsmaterialien Barriereschichten aus anderen Materialien eingebaut werden. Den Barriereschichten kommt bei Verpackungen eine besondere Bedeutung zu, denn Haltbarkeit und Sicherheit von Lebensmitteln, kosmetischen und pharmazeutischen Produkten erfordern aufgrund der zu erfüllenden Eigenschaften häufig Hochleistungsverpackungen.

EP 0 802 218 A2 und EP 2 272 928 A1 offenbaren Verbundsysteme, die aus einem Trägermaterial und einer Barriereschicht aus einem Hybridpolymer bestehen und im Verpackungsbereich oder für technische Anwendungen eingesetzt werden.

QUE, W. et al.: Preparation of hard optical coatings based on an organic / inorganic composite by sol-gel method. In: Mater. Lett., Bd. 42, 2000, Nr. 5, S. 326-330 offenbart ein Verbundsystem aus einem Siliziumträger und einer optisch aktiven Beschichtung, die durch Hochtemperaturbehandlung eines Hybridpolymers erhalten wird.

Die Barriereeigenschaften der Verbundsysteme des Standes der Technik sind jedoch für bestimmte Anwendungen nicht ausreichend, so dass ein großer Bedarf an polymeren Schichtmaterialien mit weiter verbesserten Barriereeigenschaften besteht.

### Durch die Erfindung zu lösende Aufgaben

Daher ist es die Aufgabe der vorliegenden Erfindung, eine Zusammensetzung bereitzustellen, mit der ein Hybridpolymer mit verbesserten Barriereeigenschaften hergestellt werden kann. Zudem ist es die Aufgabe der vorliegenden Erfindung, eine hohe Netzwerkdichte des Hybridpolymers bei gleichzeitiger Reduktion der Sprödigkeit des Hybridpolymers zu gewährleisten.

### Zusammenfassende Darstellung der Erfindung

Die Aufgaben wurden durch Bereitstellen einer Zusammensetzung, eines Hybridpolymers und eines Verbundes gemäß der vorliegenden Erfindung gelöst.

Der Gegenstand der vorliegenden Erfindung ist durch die folgenden Aspekte definiert:
[1] Zusammensetzung, welche die Verbindungen (A) bis (C) in den folgenden Anteilen enthält, die zusammen 100 Molprozent ergeben:
   (A) mindestens 30 Molprozent, vorzugsweise über 40 Molprozent eines Silans der Formel (I),

      SiX₄ (I)

      worin X eine Hydroxygruppe oder eine hydrolytisch kondensierbare organische Gruppe ist,
      wobei das Silan teilweise in hydrolytisch kondensierter Form vorliegen kann;
   (B) mindestens 30 Molprozent eines Silans der Formel (II)

      R¹ₐR²_{b}SiX_{4-a-b} (II)

      worin R¹ ein organisch vernetzbarer und nicht hydrolytisch kondensierbarer Rest ist, und vorzugsweise eine organisch polymerisierbare Kohlenstoff-Kohlenstoff-Doppelbindung, einen cyclischer Ether oder eine Spirogruppe aufweist, R² ein weder organisch vernetzbarer noch hydrolytisch kondensierbarer Rest ist, X Wasserstoff, eine Hydroxygruppe oder eine hydrolytisch kondensierbare organische Gruppe ist, a 1, 2, 3 oder 4 ist und b 0, 1, 2 oder 3 ist, wobei die Summe von a und b höchstens 4 ist,
      wobei das Silan teilweise in hydrolytisch kondensierter Form vorliegen kann;
   (C) mindestens 10 Molprozent einer Metallverbindung der Formel (III):

      MX_{y} (III)

      worin M ein drei- oder vierwertiges Metall ist, X eine Hydroxygruppe oder eine mit der Verbindung (A) hydrolytisch kondensierbare organische Gruppe ist und y 3 oder 4 ist, wobei Formel (III) vorzugsweise MX₄ ist.
[1-1] Zusammensetzung nach Aspekt [1], wobei die hydrolytisch kondensierbare organische Gruppe Alkoxy, Acyloxy, Alkylcarbonyl, Alkoxycarbonyl oder NR'₂, wobei R' Wasserstoff, Alkyl oder Aryl ist. [1-2] Zusammensetzung nach Aspekt [1] oder [1-1], wobei R¹ eine Vinyl-, Allyl-, Acryl-, Methacrylgruppe, einen cyclischen Ether oder eine Spirogruppe enthält. [1-3] Zusammensetzung nach einem der vorstehenden Aspekte, wobei R² unsubstituiertes oder substituiertes Alkyl, Alkenyl, Aryl, Alkylaryl oder Arylalkyl mit 1 bis 50 Kohlenstoff-Atomen ist, wobei diese Reste durch Sauerstoff- oder Schwefel-Atome, durch Urethan-, Ester-, Carbonyl-, Amid- oder Amino-Gruppen unterbrochen sein können. [1-4] Zusammensetzung nach einem der vorstehenden Aspekte, wobei in der Verbindung (C) M Titan oder Zirkonium und X ein Halogenid, insbesondere Chlorid, oder ein Alkoholat ist.
[1-5] Zusammensetzung nach einem der vorstehenden Aspekte, wobei eine Zusammensetzung ausgeschlossen ist, die eine Formulierung aus 40 Molprozent Tetraethoxysilan (TEOS), 40 Molprozent γ-Glycidoxypropyltrimethoxysilan (GLYMO) und 20 Molprozent Tetrapropylorthotitanat (TIP) enthält und zudem Chlorwasserstoff, Acetylaceton, Ethanol und Wasser beinhaltet und worin das Molverherhältnis von Wasser/(TEOS+GLYMO) 4 ist, das Molverhältnis von Acetylaceton/TIP 4 ist und das Molverhältnis von Chlorwasserstoff/TEOS 0,02 ist.

In Aspekt [1-5] wird die im Abschnitt "2. Experimental" von QUE, W. et al. offenbarte Zusammensetzung "GTT" ausgeschlossen.
[1-6] Zusammensetzung nach einem der vorstehenden Aspekte, insbesondere [1-5], wobei die Zusammensetzung zur Herstellung eines Hybridpolymers geeignet ist, das durch hydrolytisches Kondensieren von hydrolytisch kondensierbaren Komponenten und organisches Vernetzen von organisch vernetzbaren Komponenten der Zusammensetzung erhältlich ist und als Material für eine flexible Barriereschicht geeignet ist.[1-7] Zusammensetzung nach Aspekt [1-6], wobei das Hybridpolymer als Material für eine Gasbarriereschicht, vorzugsweise Sauerstoffbarriereschicht geeignet ist.
[1-8] Zusammensetzung nach Aspekt [1-6] oder [1-7], wobei das Hybridpolymer zur Auftragung als Barriereschicht auf einen flexiblen Träger unter Bildung eines Verbundes geeignet ist.
[1-9] Zusammensetzung nach einem der Aspekte [1-6] bis [1-8], wobei die Barriereschicht oder der Verbund zum Falten geeignet ist, vorzugsweise gefaltet und geknickt werden kann, noch bevorzugter ohne Rissbildung in der Barriereschicht unter Bildung einer Faltkante gefaltet werden kann.
[2] Zusammensetzung nach einem der vorstehenden Aspekte, wobei
   X in der Formel (I) eine hydrolytisch kondensierbare organische Gruppe ist;
   X in der Formel (II) eine hydrolytisch kondensierbare organische Gruppe ist, a 1, 2 oder
   3 ist und die Summe von a und b höchstens 3 ist; und
   X in der Formel (III) eine Alkoholatgruppe ist.
[3] Zusammensetzung nach einem der vorstehenden Aspekte, welche die Verbindungen (A) bis (C) in den folgenden Anteilen enthält, die zusammen 100 Molprozent ergeben: mindestens 40 Molprozent, vorzugsweise über 40 Molprozent der Verbindung (A), mindestens 35 Molprozent der Verbindung (B) und mindestens 15 Molprozent der Verbindung (C).[4] Zusammensetzung nach einem der vorstehenden Aspekte, wobei die Verbindung (A) ein Tetraalkoxysilan ist und die Verbindung (C) ein Titanalkoholat ist.
[4-1] Zusammensetzung nach Aspekt [4], die über 40 Molprozent der Verbindung (A), bezogen auf 100 Molprozent der Summe der Verbindungen (A) bis (C), enthält.
[5] Zusammensetzung nach einem der vorstehenden Aspekte, wobei die Summe der Verbindungen (A) bis (C) mindestens 90 Molteile, vorzugsweise 100 Molteile, von 100 Molteilen der zur Bildung eines anorganisch-organischen Hybridpolymers geeigneten Komponenten ist.
[6] Zusammensetzung nach einem der vorstehenden Aspekte, die eine Verbindung (D) enthält, die als Komplexierungsmittel für die Verbindung (C) geeignet ist.
[7] Zusammensetzung nach Aspekt [6], wobei die Verbindung (D) organisch vernetzbar ist.
[8] Verfahren zur Herstellung eines Hybridpolymers, welches das hydrolytische Kondensieren von hydrolytisch kondensierbaren Komponenten und das organische Vernetzen von organisch vernetzbaren Komponenten der Zusammensetzung nach einem der Aspekte [1] bis [7] umfasst.
[9] Hybridpolymer, erhältlich durch hydrolytisches Kondensieren von hydrolytisch kondensierbaren Komponenten und organisches Vernetzen von organisch vernetzbaren Komponenten der Zusammensetzung nach einem der Aspekte [1] bis [7].
[9-1] Hybridpolymer nach Aspekt [9], in welches das vierwertige Metall der Verbindung (C) durch hydrolytische Kondensation eingebunden ist. [9-2] Hybridpolymer nach Aspekt [9] oder [9-1], in welches die Verbindung (D) durch organisches Vernetzen eingebunden ist.
[9-3] Hybridpolymer nach einem der Aspekte [9] bis [9-2], wobei die Zusammensetzung diejenige des Aspekts [1-5] ist.
[9-4] Hybridpolymer nach einem der Aspekte [9] bis [9-3], welches die in einem der Aspekte [1-6] bis [1-9] beschriebenen Eigenschaften aufweist.
[10] Hybridpolymer nach einem der Aspekte [9] bis [9-4], wobei mindestens 50 % der vierwertigen Atome, bestehend aus den Siliciumatomen der Verbindung (A) und den Metallatomen M der Verbindung (C), Verbindungen mit vier Sauerstoffatomen ausbilden und jedes der vier Sauerstoffatome wieder mit Silicium oder M verbunden ist.
[11] Verwendung des Hybridpolymers nach einem der Aspekte [9] bis [10], insbesondere [9-3] als Barrierematerial.
[11-1] Verwendung nach Aspekt [11], wobei das Barrierematerial ein Gasbarrierematerial, vorzugsweise ein Sauerstoffbarrierematerial ist.[12] Verbund, enthaltend ein Substrat und eine Hybridpolymerschicht nach einem der Aspekte [9] bis [10].
[12-1] Verbund nach Aspekt [12], wobei das Substrat zum Falten geeignet ist, vorzugsweise gefaltet und geknickt werden kann, noch bevorzugter ohne Rissbildung unter Bildung einer Faltkante gefaltet werden kann.
[12-2] Verbund nach Aspekt [12] oder [12-1], wobei das Substrat nicht Silizium ist.[13] Verbund nach einem der Aspekte [12] bis [12-2]], wobei das Substrat ein Träger mit einer Metalloxidschicht ist.
[13-1] Verbund nach einem der Aspekte [12] bis [13], der die Komponenten (i) Träger, (ii) Metalloxidschicht und (iii) Hybridpolymerschicht des Aspekts [9] oder [10] aufweist, wobei die Anordnung (i)/(ii)/(iii) oder (i)/(iii)/(ii) ist und die Komponenten unmittelbar übereinander liegen.
[14] Verfahren zur Herstellung eines Verbundes, enthaltend ein Substrat und eine Hybridpolymerschicht, nach einem der Aspekte [12] bis [13], welches folgende Schritte umfasst:
   (a) das Bereitstellen einer Zusammensetzung nach einem der Aspekte [1] bis [7], worin die hydrolytisch kondensierbaren Komponenten zumindest teilweise in hydrolytisch kondensierter Form als Polykondensat vorliegen;
   (b) das Auftragen des Polykondensats auf das Substrat unter Bildung einer Beschichtung; und
   (c) das Bilden der Hybridpolymerschicht durch organisches Vernetzen von organisch vernetzbaren Komponenten der Beschichtung.
[15] Verwendung des Verbundes nach einem der Aspekte [12] bis [13] als Barrierematerial, vorzugsweise Gasbarrierematerial.
[15-1] Verwendung des Verbundes nach Aspekt [15] als Verpackungsmaterial von Lebensmitteln, kosmetischen und pharmazeutischen Produkten, sowie empfindlichen technischen Produkten.
[16] Verwendung einer Zusammensetzung nach einem der Aspekte [1] bis [7] zur Herstellung eines Hybridpolymers, das durch hydrolytisches Kondensieren von hydrolytisch kondensierbaren Komponenten und organisches Vernetzen von organisch vernetzbaren Komponenten der Zusammensetzung erhältlich ist und als Material für eine flexible Barriereschicht geeignet ist.
[16-1] Verwendung nach Aspekt [16], wobei das Hybridpolymer als Material für eine Gasbarriereschicht, vorzugsweise Sauerstoffbarriereschicht geeignet ist.
[16-2] Verwendung nach Aspekt [16] oder [16-1], wobei das Hybridpolymer zur Auftragung als Barriereschicht auf einen flexiblen Träger unter Bildung eines Verbundes geeignet ist.

### Vorteile der Erfindung

Die erfindungsgemäße Zusammensetzung ist ein Ausgangsmaterial für Hybridpolymere mit hervorragenden Barriereeigenschaften. Sie ermöglicht die Herstellung eines Hybridpolymers, das eine hervorragende Ausgewogenheit zwischen hoher Netzwerkdichte und geringer Sprödigkeit aufweist und damit auch für sehr flexible Träger geeignet ist.

Die erfindungsgemäßen Hybridpolymere ermöglichen einfach recycelbare Monomaterialverpackungen, aber auch papierbasierte bzw. kompostierbare Verpackungen für nachhaltige Verpackungslösungen. Bzgl. der Trägermaterialien bestehen keine Beschränkungen: es können fossil-basierte, biobasierte und/oder bioabbaubare, z. B. kompostierbare, Materialien eingesetzt werden, da auch fossil-basierte, biobasierte und/oder bioabbaubare Hybridpolymere genutzt werden können.

Die Beschichtungen sind für Einweg- und für Mehrwegverpackungen geeignet. Die Beschichtungen sind mit anderen Beschichtungen und Materialien verträglich (z. B. überdruckbar, verklebbar, versiegelbar), und sie sind für industrielle Standardprozesse geeignet.

Die Barriereschicht kann mit einer Dicke von weniger 3 µm so dünn ausgeführt werden, dass die beschichteten Verpackungsmaterialien als Monomaterial-Verpackungen behandelt und leicht recycelt werden können. Auch beschichtete Papierträger können problemlos recycelt werden.

Durch die hervorragende Barrierewirkung des erfindungsgemäßen Hybridpolymers muss das Substrat als solches keine Barrierewirkung haben. Daher können als Substrate beispielsweise originäre Kunststoffe oder Rezyklate, Mehrschichtfolien oder Monofolien und Materialgemische oder Monomaterialien, aber auch Papier, Pappe, sonstige Faserverbundmaterialien oder Metall eingesetzt werden.

### Ausführungsformen der Erfindung

Die erfindungsgemäße Zusammensetzung enthält die Verbindungen (A) bis (C) in den folgenden Anteilen, die zusammen 100 Molprozent ergeben: (A) mindestens 30 Molprozent eines Silans der Formel (I), wobei das Silan teilweise hydrolytisch kondensiert vorliegen kann; (B) mindestens 30 Molprozent eines Silans der Formel (II), wobei das Silan teilweise hydrolytisch kondensiert vorliegen kann; (C) mindestens 10 Molprozent einer Metallverbindung der Formel (III).

Soweit die Verbindung (A) bzw. (B) teilweise hydrolytisch kondensiert vorliegt, beziehen sich die angegebenen Anteile auf die Menge an Silicium in dem Kieselsäure(hetero)polykondensat.

Die Verbindungen (A) bis (C) stellen vorzugsweise den Großteil der zur Bildung eines anorganisch-organischen Hybridpolymers geeigneten der Komponenten der Zusammensetzung dar. Vorzugsweise ist die Summe der Verbindungen (A) bis (C) mindestens 90 Molteile, vorzugsweise 100 Molteile, von 100 Molteilen aller zur Bildung eines anorganisch-organischen Hybridpolymers geeigneten Komponenten. Es ist also bevorzugt, dass in der Zusammensetzung ausschließlich die Verbindungen (A) bis (C) zur Bildung eines anorganisch-organischen Hybridpolymers geeignet sind.

Der Anteil der Summe der Verbindungen (A) bis (C) in der Zusammensetzung ist nicht eingeschränkt und ist vorzugsweise mehr als 50 Massenprozent, stärker bevorzugt mehr als 80 Massenprozent. Andere Bestandteile der Zusammensetzung können beispielsweise Füllstoffe sein.

Die Zusammensetzung kann bei Bedarf Lösungsmittel enthalten. Sie kann auch Polymere und/oder Füllstoffe enthalten. Die Füllstoffe sind vorzugsweise inert und nicht chemisch reaktiv. Sie können aber auch eine aktive Funktion einnehmen (z.B. antimikrobielle Funktion, aktive Barrierefunktionen). Sie sollten im hybriden Sol lösbar bzw. dispergierbar und nicht hygroskopisch sein und eine Partikelgröße haben, welche das optische Erscheinungsbild der Beschichtung nicht beeinflusst. Typische Füllstoffe sind Stärke, chemisch modifizierte Stärke, Dextrin, mikrokristalline Cellulose, unlösliche Cellulosederivate, sowie anorganische Verbindungen (z.B. Talk, TiOz, SiOz, Silikate, Tonmaterialien, unlösliche Carbonate und Phosphate). Der Anteil des Füllstoffes (vorzugsweise in einer Menge von 1 - 30 % der Beschichtung) ist abhängig vom Material. Stärke oder Dextrin verbessern die mechanischen Eigenschaften und erleichtern die Verarbeitbarkeit. Anorganische Füllstoffe wie Silikate, Aerosile, Stöberpartikel verbessern die Gasbarriere und darüber hinaus auch die Feuchtebarriere.

Das erfindungsgemäße Hybridpolymer und der erfindungsgemäße Verbund können als Barrierematerial eingesetzt werden, insbesondere zur Verwendung als Verpackungsmaterial von Lebensmitteln, kosmetischen und pharmazeutischen Produkten, sowie empfindlichen technischen Produkten. Die Barrierewirkung kann vorteilhaft verschiedene Arten von Diffusion/Migration unterbinden, nämlich der Migration/Diffusion aus dem Füllgut durch die Verpackung in die Umwelt, von der Umwelt durch die Verpackung hin zum Füllgut und die Migration/Diffusion aus der Verpackung sowohl in das Produkt als auch in die Umwelt. Bekannte permeierende Stoffe sind Sauerstoff, Wasserdampf, Aromen, Öle, Fette, Weichmacher, Reststoffe, Farben, Monomere z.B. vom Herstellungsprozess und Katalysatorreste, außerdem NIAS. Verpackungen, deren Materialien im Kreislauf geführt werden, weisen Anreicherungen von Fremdstoffen auf, die aus dem Material an die Oberfläche diffundieren und damit in das Produkt oder in die Umwelt gelangen können und somit eine potentielle Gefahr darstellen. Der undefinierbare Fremdstoffanteil in den Polymeren führt auch zu abweichenden Barriereeigenschaften der Polymere. In Papierverpackungen aus Recyclingmaterialien sind migrationsfähige Stoffe wie beispielsweise MOSH/MOAH MOSH: Mineral Oil Saturated Hydrocarbons (Gesättigte Mineralölkohlenwasserstoffe), MOAH: Mineral Oil Aromatic Hydrocarbons (Aromatische Mineralölkohlenwasserstoffe) enthalten.

In der vorliegenden Beschreibung werden Schichten, Verbindungen, Komponenten und dergleichen im Allgemeinen im Singular beschrieben, z. B. "eine" Schicht oder "enthält eine" Schicht. Es wird betont, dass diese Formulierungen, sofern nicht anders angegeben, keineswegs das Vorhandensein von mehr als einer der angegebenen Schichten, Komponenten, Verbindungen oder dergleichen ausschließen soll. Hierin beziehen sich Prozentangaben (%) auf Massenprozent, sofern nichts anderes angegeben ist. Die genannten Standards und Normen beziehen sich, sofern nicht anders angegeben, auf die zum Zeitpunkt der Einreichung dieser Anmeldung neueste verfügbare Version.

### Kieselsäure(hetero)polykondensat

Die in der vorliegenden Erfindung eingesetzten Silane können hydrolytisch kondensierbare Gruppen enthalten. Durch hydrolytische Kondensation dieser Silane entsteht ein Kieselsäure(hetero)polykondensat bzw. ein organisch modifiziertes Kieselsäure(hetero)polykondensat.

Die anorganische Komponente des Kieselsäure(hetero)polykondensats besteht aus Siliciumkationen, gegebenenfalls in Kombination mit weiteren Kationen wie Aluminium, Zirkonium, Titan oder Bor sowie Kombinationen davon, die über Sauerstoffbrücken miteinander verknüpft sind und dabei ein Netzwerk bilden. Damit handelt es sich um ein Kieselsäurepolykondensat oder, im Falle der Anwesenheit weiterer Metallionen, um ein Kieselsäureheteropolykondensat. Diese Heteroatome sind unter Elementen aus der Gruppe B, AI, P, Sn, Pb, der Übergangsmetalle, der Lanthaniden und der Actiniden ausgewählt. Ein Beispiel für ein solches Heteropolykondensat ist ein Kondensat, das Silicium und Aluminium enthält. Als Oberbegriff für die reinen Kieselsäurepolykondensate und die Heteroatome enthaltenden Polykondensate wird der Begriff Kieselsäure(hetero)polykondensat verwendet. Das Kieselsäure(hetero)polykondensat wird in der Regel durch hydrolytische Kondensation von Silanen, ggf. in Kombination mit co-kondensierbaren Verbindungen anderer Metallionen, erzeugt. Diese Silane können hydrolysierbare Gruppen wie Alkoxide oder Hydroxidgruppe tragen. Sie können aber auch über Kohlenstoff unmittelbar an Silicium gebundene organische Gruppen tragen. Diese Gruppen bleiben bei der hydrolytischen Kondensation an die jeweiligen Siliciumatome gebunden, so dass das Polykondensat mit den organischen Gruppen modifiziert ist.

Die organischen Gruppen können Derivate einer oder mehrerer Arten von natürlichen oder synthetischen organischen Polymeren sein. Die organischen Gruppen können zumindest teilweise über Si-C-Bindungen in das Kondensat eingebunden vorliegen. Die über Si-C-Bindungen in das Kondensat eingebundene organische Gruppen können thermisch oder photochemisch organisch polymerisierbare Gruppen sein, insbesondere cyclische Ethergruppen. Die organischen Gruppen können aber auch über Sauerstoff an Silicium gebunden sein. Sie können biologisch abbaubar, z. B. kompostierbar sein.

Die hydrolytische Kondensation der Silane kann unvollständig sein, so dass ein von dem Silan abgeleitetes Kieselsäure(hetero)polykondensat einer weiteren hydrolytischen Kondensation zugänglich ist und somit ein Vorkondensat darstellt. Hierin bedeutet der Ausdruck "wobei das Silan teilweise hydrolytisch kondensiert vorliegen kann", dass das Silan zumindest teilweise als ein solches Vorkondensat vorliegen kann. Dieses kann erhalten werden, indem das angegebene Silan in Anwesenheit oder Abwesenheit von hydrolytisch kondensierbaren Verbindungen, die Heteroatome enthalten, durch hydrolytische Kondensation umgesetzt wird. Das teilweise hydrolytisch kondensierte Silan liegt also als teilkondensiertes Kieselsäure(hetero)polykondensat vor.

Da das Kieselsäure(hetero)polykondensat anorganische und organischen Gruppen enthält, wird es bzw. ein Vorkondensat davon hierin manchmal einfach als "Hybridpolymer" bezeichnet. Wenn nichts anderes angegeben ist, umfasst der Ausdruck "Hybridpolymer" auch Polymere mit biobasierten und/oder biologisch abbaubaren, z. B. kompostierbaren Komponenten. Ein Beispiel eines Hybridpolymers ist ORMOCER^{®} bzw. bioORMOCER^{®} (Markenname der Fraunhofer Gesellschaft zur Förderung der angewandten Forschung e.V., München).

### Verbindung (A)

Die erfindungsgemäße Zusammensetzung enthält ein Silan der Formel SiX₄ (Formel (I)), worin X eine Hydroxygruppe oder eine hydrolytisch kondensierbare organische Gruppe ist, und/oder ein davon abgeleitetes teilkondensiertes Kieselsäure(hetero)polykondensat. Die Gruppen X können gleich oder verschieden voneinander sein.

Vorzugsweise ist X Alkoxy, Acyloxy, Alkylcarbonyl, Alkoxycarbonyl oder NR'₂, wobei R' Wasserstoff, Alkyl oder Aryl ist.

Die Alkylreste sind z.B. geradkettige, verzweigte oder cyclische Reste mit 1 bis 50, insbesondere mit 1 bis 20 Kohlenstoff-Atomen und vorzugsweise niedere Alkylreste mit 1 bis 6, besonders bevorzugt mit 1 bis 4 Kohlenstoffatomen. Spezielle Beispiele sind Methyl, Ethyl, *n*-Propyl, *i*-Propyl, *n*-Butyl, *i*-Butyl, *s*-Butyl, *t*-Butyl, *n*-Pentyl, *n*-Hexyl, Cyclohexyl, 2-Ethylhexyl, Dodecyl und Octadecyl. Arylreste sind beispielsweise Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, oder Epoxy. Unter den Halogenen sind Fluor, Chlor und Brom und insbesondere Chlor bevorzugt.

Besonders bevorzugte Silane der Formel (I) weisen vier C₁ -C₄ -Alkoxygruppe auf und sind beispielsweise Si(OCH₃)₄, Si(OC₂H₅)₄, Si(OCH₃)(OC₂H₅)₃ , Si(OCH₃)₂(OC₂H₅)₂ und Si(OCH₃)₃(OC₂H₅).

### Verbindung (B)

Die erfindungsgemäße Zusammensetzung enthält ein Silan der Formel R¹ₐR²_{b}SiX_{4-a-b} (Formel (II)), worin R¹ ein organisch vernetzbarer und nicht hydrolytisch kondensierbarer Rest ist, R² ein weder organisch vernetzbarer noch hydrolytisch kondensierbarer Rest ist, X Wasserstoff, eine Hydroxygruppe oder eine hydrolytisch kondensierbare organische Gruppe ist, a 1, 2, 3 oder 4 ist und b 0, 1, 2 oder 3 ist, wobei die Summe von a und b höchstens 4 ist; und/oder ein davon abgeleitetes teilkondensiertes Kieselsäure(hetero)polykondensat. Sind mehrere Gruppen X vorhanden, können diese gleich oder verschieden voneinander sein. Entsprechendes gilt für die Gruppen R¹ und R².

Vorzugsweise ist R¹ ein geradkettiger oder verzweigter organischer Rest mit mindestens einer Kohlenstoff-Kohlenstoff-Doppelbindung und/oder mit mindestens einer Epoxidgruppe. Die Kohlenstoff-Kohlenstoff-Doppelbindungen können z.B. in Vinyl-, Allyl-, Acryl-, und/oder Methacrylgruppen enthalten sein. In diesem Fall weist mindestens einer der Reste R¹ 2 bis 50, vorzugsweise 6 bis 30 Kohlenstoffatome auf. Vorzugsweise enthält R¹ eine Vinyl-, Allyl-, Acryl-, Methacrylgruppe, cyclische Ether oder eine Spirogruppe. Spezielle Beispiele für Silane mit Epoxidgruppen im Rest R sind :
Glycidoxymethyltrimethoxysilan, Glycidoxymethyltriethoxysilan,
2-Glycidoxyethyltrimethoxysilan, 2-Glycidoxyethyltriethoxysilan,
3-Glycidoxypropyltrimethoxysilan, 3-Glycidoxypropyltriethoxysilan,
3-Glycidoxypropyltri(methoxyethoxy)silan, 3-Glycidoxypropyltriacetoxysilan,
4-Glycidoxybutyltrimethoxysilan, 4-Glycidoxybutyltriethoxysilan,
Glycidoxymethyl(methyl)dimethoxysilan, Glycidoxymethyl(ethyl)dimethoxysilan,
Glycidoxymethyl(phenyl)dimethoxysilan, Glycidoxymethyl(vinyl)dimethoxysilan,
Glycidoxymethyl(dimethyl)methoxysilan, 2-Glycidoxyethyl(methyl)dimethoxysilan,
2-Glycidoxyethyl(ethyl)dimethoxysilan, 2-Glycidoxyethyl(dimethyl)methoxysilan,
3-Glycidoxypropyl(methyl)dimethoxysilan, 3-Glycidoxypropyl(ethyl)dimethoxysilan,
3-Glycidoxypropyl(dimethyl)methoxysilan, 4-Glycidoxybutyl(methyl)dimethoxysilan,
4-Glycidoxybutyl(ethyl)dimethoxysilan, 4-Glycidoxybutyl(dimethyl)methoxysilan,
Bis-(glycidoxymethyl)dimethoxysilan, Bis-(glycidoxymethyl)diethoxysilan,
Bis-glycidoxyethyl)dimethoxysilan, Bis-(glycidoxyethyl)diethoxysilan,
Bis(glycidoxypropyl)dimethoxysilan, Bis-(glycidoxypropyl)diethoxysilan,
Tris-(glycidoxymethyl)methoxysilan, Tris-(glycidoxymethyl)ethoxysilan,
Tris-(glycidoxyethyl)methoxysilan, Tris-(glycidoxyethyl)ethoxysilan,
Tris-(glycidoxypropyl)methoxysilan, Tris-(glycidoxypropyl)ethoxysilan,
3.4-Epoxycyclohexylmethyltrimethoxysilan, 3.4-Epoxycyclohexylmethyltriethoxysilan,
3.4-Epoxycyclohexylethyltrimethoxysilan, 3.4-Epoxycyclohexylpropyltrimethoxysilan und
3.4-Epoxycyclohexylbutyltrimethoxysilan.

R² ist vorzugsweise unsubstituiertes oder substituiertes Alkyl, Alkenyl, Aryl, Alkylaryl oder Arylalkyl mit 1 bis 50 Kohlenstoffatomen ist, wobei diese Reste durch Sauerstoff- oder Schwefel-Atome, durch Urethan-, Ester-, Carbonyl-, Amid- oder Aminogruppen unterbrochen sein können. Die Alkylreste sind z.B. geradkettige, verzweigte oder cyclische Reste mit 1 bis 50, insbesondere mit 1 bis 20 Kohlenstoffatomen und vorzugsweise Niederalkylreste mit 1 bis 6, besonders bevorzugt mit 1 bis 4 Kohlenstoffatomen. Spezielle Beispiele sind Methyl, Ethyl, *n*-Propyl, *i*-Propyl, *n*-Butyl, *i*-Butyl, *s*-Butyl, *t*-Butyl, *n*-Pentyl, *n*-Hexyl, Cyclohexyl, 2-Ethylhexyl, Dodecyl und Octadecyl. Die Alkenylreste sind z.B. geradkettige, verzweigte oder cyclische Reste mit 2 bis 50, bevorzugt mit 2 bis 20 Kohlenstoffatomen und vorzugsweise Niederalkenylreste mit 2 bis 6 Kohlenstoffatomen, wie z.B. Vinyl, Allyl und 2-Butenyl. Bevorzugte Arylreste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen- und Alkylenarylenreste leiten sich vorzugsweise von den oben genannten Alkyl- und Arylresten ab. Spezielle Beispiele sind Methoxy, Ethoxy, *n*- und *i*-Propoxy, *n-, i*-, *s*- und *t*-Butoxy, Monomethylamino, Monoethylamino, Dimethylamino, Diethylamino, *N*-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl. Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, oder Nitro. Unter den Halogenen sind Fluor, Chlor und Brom und insbesondere Chlor bevorzugt.

Es kann wünschenswert sein, dass das mit der erfindungsgemäßen Zusammensetzung hergestellte Hybridpolymer biologisch abbaubar, z. B. kompostierbar ist. Für die biologische Abbaubarkeit der Beschichtung ist es notwendig, dass ein möglichst großer Anteil, vorzugsweise mindestens 10 %, der organischen Gruppen, die in das anorganische Netzwerk des Hybridpolymers eingebunden sind, biologisch abbaubar ist. Daher weist vorzugsweise zumindest ein Teil der organischen Gruppen R¹ und R² eine Kohlenwasserstoffkette mit 2 bis 8, vorzugsweise mit 2 bis 6 Kohlenstoffatomen auf, die sich zwischen zwei unter Ether-, Ester-, Amid-, und Urethangruppen ausgewählten Gruppen befindet. Insbesondere kann zumindest ein Teil der organischen Gruppen mindestens zwei Kohlenwasserstoffketten mit 2 bis 8 Kohlenstoffatomen aufweisen, die verzweigtkettig zueinander vorliegen. Besonders bevorzugt weist zumindest ein Teil der anorganischen, biologisch abbaubaren Gruppen die Komponente [O-(CH₂)ₘ-C(O)-O]n auf, worin m eine ganze Zahl zwischen 2 und 8 ist, n 0, 1, 2 oder 3 oder größer 3 ist und, sofern die genannte Komponente in der organischen, biologisch abbaubaren Gruppe mehrfach vorhanden ist, unterschiedliche Werte annehmen kann, mit der Maßgabe, dass n in der einzigen oder in mindestens einer der genannten Komponenten 1 oder größer 1 ist. Die organischen Gruppen können auch aus der Gruppe ausgewählt sein, die aus Polycaprolactontriol (fossilen Ursprungs aber biologisch abbaubar), Chitosan, Cellulose, Cellulosederivaten; Hemicellulosen und Cellulosebausteinen und weiteren bioorganischen Ressourcen besteht. Weitere bioorganische Ressourcen sind beispielsweise Kohlenhydrate und deren Derivate wie Zucker, Stärke und dergleichen. Um eine An- und Einbindung der verwendeten abbaubaren Komponenten in das hybridpolymere Netzwerk zu ermöglichen, werden diese teilweise chemisch modifiziert. Durch die Variation des Biopolymer-Gehalts kann darüber hinaus eine Anpassung der Abbauraten erzielt werden. Dies und die Wahl des Biopolymers selbst eröffnen eine Möglichkeit, den Abbau bezüglich seiner Geschwindigkeit zu steuern.

Durch den Einsatz der Materialklasse auf Basis der Hybridpolymere und der biobasierten und bioabbaubaren, z. B. kompostierbaren Hybridpolymere können bei gleichzeitiger Kompostierbarkeit ausgezeichnete Barriereeigenschaften erreicht werden.

### Verbindung (C)

Die erfindungsgemäße Zusammensetzung enthält eine Metallverbindung der Formel MX_{y} (Formel (III)), worin M ein vier- oder dreiwertiges Metall ist, X eine Hydroxygruppe oder eine mit der Verbindung (A) hydrolytisch kondensierbare organische Gruppe ist und y 3 bzw. 4 ist. Die Gruppen X können gleich oder verschieden voneinander sein. Die Formel (III) ist vorzugsweise MX₄.

Die Verbindung (C) ist hydrolytisch kondensierbar, so dass M als Heteroatom in das anorganische Netzwerk unter Bildung eines Kieselsäure(hetero)polykondensats eingebaut werden kann. Die Verbindung (C) erhöht den anorganisch vernetzten Anteil des Hybridpolymers und damit die Barrierewirkung. Ebenso werden die Härte und Abriebbeständigkeit erhöht.

Ein Beispiel eines dreiwertigen Metalls ist Aluminium. M ist vorzugsweise vierwertig, z. B. Titan oder Zirkonium. Konkrete Beispiele für die Verbindung (C) sind TiCl₄ , Ti(OC₂H₅)₄ , Ti(OC₃H₇)₄ , Ti(O-*i*-C₃H₇)₄ , Ti(OC₄H₉)₄ , Ti(2-ethylhexoxy)₄ , ZrCl₄ , Zr(OC₂H₅)₄ , Zr(OC₃H₇)₄ , Zr(O-*i*-C₃H₇)₄ , Zr(OC₄H₉)₄ , Zr(2-ethylhexoxy)₄ und ZrOCl₂.

### Verbindung (D)

Die erfindungsgemäße Zusammensetzung kann Verbindung (D) enthalten, die als Komplexierungsmittel für die Verbindung (C) geeignet ist.

Verbindung (D) dient zum einen als Komplexierungsmittel für gegebenenfalls eingesetzte hydrolysierbare Metallverbindungen und damit zur Erhöhung der Topfzeit. Geeignete Komplexierungsmittel sind Methacrylsäure, Acetylaceton, mehrfach funktionelle Amine oder mehrfach funktionelle Alkohole.

Die Verbindung (D) ist vorzugsweise organisch vernetzbar, beispielsweise Methacrylsäure, und bietet somit den weiteren Vorteil eines organischen Netzwerkbildners. Der Komplexbildner ist also in das organische Netzwerk einpolymerisierbar, ohne dadurch die Abriebbeständigkeit der erfindungsgemäßen Aromabarriereschichten zu reduzieren. Ferner übt die Methacrylsäure auch die Funktion eines Reaktivverdünners aus. Damit ist die Einstellung der Viskosität der Zusammensetzung möglich, und das Lösungsmittel muss nach dem Beschichtungsvorgang nicht entfernt werden.

### Verbund

Der erfindungsgemäße Verbund enthält ein Substrat und eine erfindungsgemäße Hybridpolymerschicht. Der Ausdruck "Hybridpolymerschicht" bedeutet, dass die Hybridpolymerschicht aus dem erfindungsgemäßen Hybridpolymer besteht oder zu mindestens 50 % daraus besteht. Die Hybridpolymerschicht dient ggf. zusammen mit anderen Schichten als Barriereschicht.

Das Substrat ist ein Träger mit einer oder ohne eine weitere Barriereschicht (z. B. Metalloxidschicht). Der Träger ist vorzugsweise flächig, kann aber auch eine komplexere dreidimensionale Struktur aufweisen. Der Träger kann ein beliebiges beschichtbares Material sein. Voraussetzung für die Beschichtbarkeit ist ein fester Zustand oder ein Zustand, bei dem zumindest eine definierte und stabile Oberfläche vorhanden ist. Als Basissubstrate können Polymere, Papiere, Pappen, Metalle, Glas, Holz und dergleichen eingesetzt werden. Organische Polymere sind beispielsweise Polyamid, Polyethylen, Polypropylen, Polyester oder Polymilchsäuren. Beispiele von Polymeren sind weiche und flexible Kunststofffolien einer Dicke von 10 µm bis 2 mm, z. B. Verpackungsfolien. Weitere Beispiele von Polymeren sind zumindest in gewissem Maß steife und formstabile Kunststoffe einer Dicke von 0,5 mm bis 10 mm, z. B. Wände von Behältern, wie Getränkeflaschen, Kaffeekapseln oder Trays. Der Träger kann beispielsweise ein originäres Polymer oder ein Rezyklat sein. In einem Rezyklat auf Kunststoffbasis können unerwünschte Additive, Reststoffe, Weichmacher oder Monomere nicht gebundene Katalysatorreste, Bioadditive etc. als Verunreinigungen enthalten sein. Ein originärer Kunststoff enthält Verunreinigungen, wie Monomere oder unerwünschte Weichmacher, nicht oder nur in sehr geringer Menge. Es können jedoch auch erwünschte Weichmacher, beispielsweise im Fall von Weich-PVC, in größeren Mengen enthalten sein, die im Polymer verbleiben sollen, um die Haltbarkeit sicherzustellen. In einem Rezyklat auf Papierbasis können unerwünschte kurzkettige Zuckerketten, Farbe, Druckerschwärze oder Nassfestmittel als Verunreinigungen enthalten sein. Ein originäres Papier enthält Verunreinigungen nicht oder nur in sehr geringer Menge. Als Träger kann ein einschichtiges Material, beispielsweise eine Monofolie, eingesetzt werden. Es kann auch ein Monomaterial eingesetzt werden, also ein Material mit einem Hauptpolymer, das mindestens 80 %, vorzugsweise 95 % des Materials ausmacht. Eine Monofolie aus Monomaterial kann bevorzugt sein.

Der erfindungsgemäße Verbund kann durch ein Verfahren hergestellt werden, das folgende Schritte umfasst: (a) das Bereitstellen einer erfindungsgemäßen Zusammensetzung, worin die hydrolytisch kondensierbaren Komponenten der Verbindungen (A) bis (C) zumindest teilweise in hydrolytisch kondensierter Form als Polykondensat vorliegen; (b) das Auftragen des Polykondensats auf ein Substrat unter Bildung einer Beschichtung; und (c) das Bilden eines Hybridpolymers durch organisches Vernetzen von organisch vernetzbaren Komponenten der Beschichtung.

Die Herstellung des Verbundes erfolgt durch Aufbringen einer Beschichtungszusammensetzung auf das Trägermaterial nach üblichen Methoden, z.B. durch ein Sprüh-, Schleuder-, Walz- oder Rakelverfahren in einer Dicke von 1-30 g/m². Enthält die Zusammensetzung Lösungsmittel, kann dieses bei Bedarf durch Trocknung entfernt werden. Anschließend wird die Beschichtung thermisch, beispielsweise bei 80-120° C, und/oder unter Einwirkung von elektromagnetischer Strahlung, z.B. UV-Strahlung oder Mikrowellen, gehärtet. Elektronenstrahlhärtung ist ebenfalls möglich.

Durch die Kombination aus Metalloxidschicht und Hybridpolymerschicht kann die Barrierewirkung zusätzlich verbessert werden. Der Ausdruck "Metalloxidschicht" bedeutet, dass die Metalloxidschicht aus dem abgeschiedenen Metalloxid besteht oder zu mindestens 50 % daraus besteht. Metalloxide können Al₂O₃, SiOz, SiO, MgO, CaO, TiOz, ZnO oder MnO oder Gemische davon sein. Bevorzugt ist Siliciumoxid SiOₓ, das Siliciummonoxid (SiO) und Siliciumdioxid (SiO₂) enthält, so dass "x" also 1,0 bis 2,0 ist. Es sind auch Werte von über 2,0 möglich, beispielsweise bis zu 2,5.

Wenn der Verbund die Komponenten (i) Träger, (ii) Metalloxidschicht und (iii) erfindungsgemäße Hybridpolymerschicht enthält, ist die Anordnung (i)/(ii)/(iii) oder (i)/(iii)/(ii) und die Komponenten liegen unmittelbar übereinander, das heißt, sie sind ohne Zwischenschicht, z. B. Klebeschicht, in unmittelbarem Kontakt.

Das Auftragen der Metalloxidschicht kann im Vakuum als physikalische Abscheidung aus der Gasphase oder durch chemische Abscheidung aus der Gasphase erfolgen. Neben dem Vakuumverfahren gibt es die Möglichkeit, Metalloxide, wie SiOₓ, flammenpyrolytisch auf Oberflächen aufzubringen.

In einem bevorzugten Verbund beträgt die Dicke des Trägers 0,01 bis 5 mm, die Dicke der Metalloxidschicht 5 bis 200 nm und die Dicke der Hybridpolymerschicht 0,1 bis 10 µm. In einem weiter bevorzugten Verbund beträgt die Dicke des Trägers 0,1 bis 5 mm, die Dicke der Metalloxidschicht 20 bis 200 nm und die Dicke der Hybridpolymerschicht 0,5 bis 10 µm. Die Dicke einer Schicht wird z.B. mittels Rasterelektronenmikroskopie ermittelt.

Die erfindungsgemäßen Verbunde können Halbstrukturen darstellen und Bestandteile von größeren Strukturen sein. Beispiele davon sind Laminate, die weitere Strukturen, z. B. weitere Schichten, aufweisen. Beispielsweise können mehrere erfindungsgemäße Verbunde in einem Laminat vorliegen. Die Verbindung der erfindungsgemäßen Verbunde mit weiteren erfindungsgemäßen Verbunden oder mit weiteren anderen Strukturen kann kovalent oder nichtkovalent sein.

### Beispiele

Es wurden Zusammensetzungen wie in Absatz [0059] von EP 2 272 928 A1 beschrieben hergestellt. Anstelle von 40 Mol-% Tetraalkoxysilan wurden jedoch 42 Mol-% Tetraalkoxysilan, nämlich Tetraethoxysilan, eingesetzt. Als Metallalkoholat wurde Titanalkoholat eingesetzt, dessen Gehalt 20 Mol-% betrug. Durch die Verwendung eines mit dieser Zusammensetzung hergestellten Hybridpolymers konnte die Sauerstoffpermeabilität in einem Verbund mit einer Substratfolie im Vergleich zu den besten Beispielen aus EP 2 272 928 A1 um fast 60 % reduziert werden, so dass im Vergleich zu der Verwendung einer Substratfolie ohne Beschichtung eine Verringerung der Sauerstoffpermeabilität von über 95 % erreicht wurde.

## Patentansprüche

1. Zusammensetzung, welche die Verbindungen (A) bis (C) in den folgenden Anteilen enthält, die zusammen 100 Molprozent ergeben:
(A) mindestens 30 Molprozent eines Silans der Formel (I),
SiX₄ (I)
worin X eine Hydroxygruppe oder eine hydrolytisch kondensierbare organische Gruppe ist,
wobei das Silan teilweise in hydrolytisch kondensierter Form vorliegen kann;
(B) mindestens 30 Molprozent eines Silans der Formel (II)
R¹ₐR²_{b}SiX_{4-a-b} (II)
worin R¹ ein organisch vernetzbarer und nicht hydrolytisch kondensierbarer Rest ist, R² ein weder organisch vernetzbarer noch hydrolytisch kondensierbarer Rest ist, X Wasserstoff, eine Hydroxygruppe oder eine hydrolytisch kondensierbare organische Gruppe ist, a 1, 2, 3 oder 4 ist und b 0, 1, 2 oder 3 ist, wobei die Summe von a und b höchstens 4 ist,
wobei das Silan teilweise in hydrolytisch kondensierter Form vorliegen kann;
(C) mindestens 10 Molprozent einer Metallverbindung der Formel (III):
MX_{y} (III)
worin M ein drei- oder vierwertiges Metall ist, X eine Hydroxygruppe oder eine mit der Verbindung (A) hydrolytisch kondensierbare organische Gruppe ist und y 3 oder 4 ist.

2. Zusammensetzung nach Anspruch 1, wobei eine Zusammensetzung ausgeschlossen ist, die eine Formulierung aus 40 Molprozent Tetraethoxysilan (TEOS), 40 Molprozent γ-Glycidoxypropyltrimethoxysilan (GLYMO) und 20 Molprozent Tetrapropylorthotitanat (TIP) enthält und zudem Chlorwasserstoff, Acetylaceton, Ethanol und Wasser beinhaltet und worin das Molverherhältnis von Wasser/(TEOS+GLYMO) 4 ist, das Molverhältnis von Acetylaceton/TIP 4 ist und das Molverhältnis von Chlorwasserstoff/TEOS 0,02 ist.

3. Zusammensetzung nach Anspruch 1 oder 2, wobei die Zusammensetzung zur Herstellung eines Hybridpolymers geeignet ist, das durch hydrolytisches Kondensieren von hydrolytisch kondensierbaren Komponenten und organisches Vernetzen von organisch vernetzbaren Komponenten der Zusammensetzung erhältlich ist und als Material für eine flexible Barriereschicht geeignet ist.

4. Zusammensetzung nach einem der vorstehenden Ansprüche, wobei das Hybridpolymer als Material für eine Gasbarriereschicht geeignet ist.

5. Zusammensetzung nach einem der vorstehenden Ansprüche, wobei
X in der Formel (I) eine hydrolytisch kondensierbare organische Gruppe ist;
X in der Formel (II) eine hydrolytisch kondensierbare organische Gruppe ist, a 1, 2 oder
3 ist und die Summe von a und b höchstens 3 ist; und
X in der Formel (III) eine Alkoholatgruppe ist.

6. Zusammensetzung nach einem der vorstehenden Ansprüche, welche die Verbindungen (A) bis (C) in den folgenden Anteilen enthält, die zusammen 100 Molprozent ergeben: mindestens 40 Molprozent der Verbindung (A), mindestens 35 Molprozent der Verbindung (B) und mindestens 15 Molprozent der Verbindung (C).

7. Zusammensetzung nach einem der vorstehenden Ansprüche, wobei die Verbindung (A) ein Tetraalkoxysilan ist und die Verbindung (C) ein Titanalkoholat ist.

8. Zusammensetzung nach einem der vorstehenden Ansprüche, die Summe der Verbindungen (A) bis (C) mindestens 90 Molteile von 100 Molteilen der zur Bildung eines anorganisch-organischen Hybridpolymers geeigneten Komponenten ist.

9. Hybridpolymer, erhältlich durch hydrolytisches Kondensieren von hydrolytisch kondensierbaren Komponenten und organisches Vernetzen von organisch vernetzbaren Komponenten der Zusammensetzung nach einem der Ansprüche 1 bis 8.

10. Hybridpolymer nach Anspruch 9, wobei mindestens 50 % der vierwertigen Atome, bestehend aus den Siliciumatomen der Verbindung (A) und den Metallatomen M der Verbindung (C), Verbindungen mit vier Sauerstoffatomen ausbilden und jedes der vier Sauerstoffatome wieder mit Silicium oder M verbunden ist.

11. Verwendung des Hybridpolymers nach Anspruch 9 oder 10 als Barrierematerial.

12. Verbund, enthaltend ein Substrat und eine Hybridpolymerschicht nach Anspruch 9 oder 10.

13. Verbund nach Anspruch 12, wobei das Substrat ein Träger mit einer Metalloxidschicht ist.

14. Verfahren zur Herstellung eines Verbundes, enthaltend ein Substrat und eine Hybridpolymerschicht, nach Anspruch 12 oder 13, welches folgende Schritte umfasst:
(a) das Bereitstellen einer Zusammensetzung nach einem der Ansprüche 1 bis 7, worin die hydrolytisch kondensierbaren Komponenten zumindest teilweise in hydrolytisch kondensierter Form als Polykondensat vorliegen;
(b) das Auftragen des Polykondensats auf das Substrat unter Bildung einer Beschichtung; und
(c) das Bilden der Hybridpolymerschicht durch organisches Vernetzen von organisch vernetzbaren Komponenten der Beschichtung.

15. Verwendung des Verbundes nach Anspruch 12 oder 13 als Barrierematerial.
